# EUROPÄISCHE PATENTSCHRIFT

(11) **EP 3 911 472 B1**
(45) Veröffentlichungstag und Bekanntmachung des Hinweises auf die Patenterteilung: **25.01.2023**
(21) Anmeldenummer: 19832105.1
(22) Anmeldetag: 20.12.2019
(51) Int. Cl.: G21F 9/30

(54) **VERFAHREN UND VORRICHTUNG ZUM AUFBEREITEN EINES KONTAMINIERTEN WERKSTÜCKS**
METHOD AND DEVICE FOR PROCESSING A CONTAMINATED WORKPIECE
PROCÉDÉ ET DISPOSITIF DE TRAITEMENT D'UNE PIÈCE CONTAMINÉE

(30) Priorität: 16.01.2019 DE 102019101095
(43) Veröffentlichungstag der Anmeldung: 24.11.2021
(73) Patentinhaber: RWE Nuclear GmbH, 45141 Essen (DE)
(72) Erfinder: GRIFFEL, Stefan, 89362 Offingen (DE); HARLACHER, Stephan, 89426 Mödingen (OT Bergheim) (DE)
(74) Vertreter: Keenway Patentanwälte Neumann Heine Taruttis
(86) Internationale Anmeldenummer: PCT/EP2019/086566
(87) Internationale Veröffentlichungsnummer: WO 2020/148071

(56) Entgegenhaltungen:
- EP-A1- 1 985 403
- EP-B1- 1 985 403
- DE-T2- 69 410 900
- US-A1- 2008 121 248
- US-B1- 6 444 097

## Beschreibung

Gegenstand der vorliegenden Erfindung ist ein Verfahren und eine Vorrichtung zum Aufbereiten von kontaminierten Werkstücken, insbesondere von radioaktiv kontaminierten Werkstücken wie zum Beispiel Bauteile von Kernkraftanlagen. Radioaktiv kontaminierte Werkstücke werden gemäß ihrer Strahlenbelastung eingelagert beziehungsweise entsorgt. Ähnlich verhält es sich mit chemisch kontaminierten Werkstücken, die beispielsweise cancerogene Kontaminationen aufweisen. Insbesondere beim Rückbau von Kernkraftanlagen entstehen erhebliche Mengen von radioaktiv kontaminierten Werkstücken, die aufgrund ihrer Strahlenbelastung eingelagert werden müssen. Oftmals sind Werkstücke lediglich im Bereich der Oberfläche stark kontaminiert, so dass es zur Reduktion der Menge an einzulagernden radioaktiv kontaminierten Werkstücken bekannt ist, diese zu dekontaminieren, insbesondere Oberflächenschichten abzutragen. Das abgetragene Material des Werkstücks kann dann eingelagert werden, während der Rest des Werkstücks - sofern die Strahlenbelastung klein genug ist - auf übliche Art und Weise einer Wiederverwertung oder Entsorgung zugeführt werden kann.

Zum Abtragen der oberflächennahen Schicht ist es bekannt, diese mechanisch oder chemisch abzutragen. Jedoch sind diese Verfahren zeitintensiv und insbesondere bei komplexen Geometrien der Werkstücke nur schwer oder unzureichend durchzuführen, so dass die Menge an kontaminiertem Material, die eingelagert werden muss, entsprechend groß ist. Gleichzeitig entstehen regelmäßig weitere Abfälle, wie beispielsweise die eingesetzten Chemikalien oder Strahlmedien, die ebenfalls eingelagert werden müssen. Weiterhin ist aus der DE 694 10 900 T2 Verfahren (Basis für den Oberbegriff der Ansprüche 1 und 4) bekannt, bei denen mittels einer Laserstrahlung ein Materialabtrag erfolgt.

Hiervon ausgehend liegt der vorliegenden Erfindung die Aufgabe zugrunde, die aus dem Stand der Technik bekannten Nachteile zumindest teilweise zu überwinden und insbesondere ein Verfahren und eine Vorrichtung anzugeben, durch die eine Dekontamination durch Abtragung der Oberfläche von kontaminierten Werkstücken einfach möglich ist, ohne dass zusätzliches Material wie beispielsweise Strahlmittel oder Säure eingesetzt werden muss.

Diese Aufgabe wird gelöst mit den Merkmalen der unabhängigen Ansprüche. Abhängige Ansprüche sind auf vorteilhafte Weiterbildungen gerichtet. Es ist darauf hinzuweisen, dass die in den abhängigen Ansprüchen einzeln aufgeführten Merkmale in beliebiger, technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Das erfindungsgemäße Verfahren zum Aufbereiten eines kontaminierten Werkstücks zeichnet sich dadurch aus, dass ein Laseremitter auf das Werkstück gerichtet wird und durch den Laseremitter Laserpulse auf einen Auftreffbereich einer Oberfläche des Werkstücks emittiert werden zur Verdampfung eines Teils des Materials des Werkstücks im Auftreffbereich, wobei das verdampfte Material durch einen Abzug abgeführt wird.

Durch ein so genanntes Laserablationsverfahren wird durch das Emittieren von hochenergetischen Laserpulsen auf den Auftreffbereich ein oberflächennaher Bereich des Materials des Werkstücks im Auftreffbereich verdampft. Das verdampfte Material liegt bei diesem Verfahren üblicherweise als Plasma vor, welches über den Abzug abgeführt wird. Der Laseremitter umfasst üblicherweise eine Laserquelle, die Laserstrahlung einer definierten Wellenlänge in vorgebbaren Leistungsdichten und/oder Pulslängen erzeugt, und eine entsprechende Optik, die eine entsprechende Fokussierung der Laserstrahlung auf den Auftreffbereich umfasst. Bevorzugt ist der Laseremitter so einstellbar, dass der Auftreffbereich in seiner Lage auf der Oberfläche des Werkstücks und gegebenenfalls seiner Größe variierbar ist, um insbesondere ein Abtragen von oberflächennahen Schichten des Werkstücks auch bei großen Werkstücken und/oder bei Werkstücken mit komplexen Geometrien erlaubt.

Ein als Laserquelle eingesetzte Laser, ein Laseremitter, eine Laserquelle zur Erzeugung des/der Laserpulse(s), der eingesetzte Wellenlängenbereich, die Leistung der Laserquelle und/oder die Länge der eingesetzten Laserpulse wird dabei in Abhängigkeit vom Materials des Werkstücks und/oder der (geschätzten) abzutragenden Dicke an Material gewählt und/oder festgelegt.

Unter einem Abzug wird eine Absauganlage für Gase verstanden, die über eine Lüftungsanlage verfügt, die einen Gasstrom weg vom Werkstück erzeugt, so dass das verdampfte Material im Gasstrom mit- und damit vom Werkstück weggeführt wird. Der Abzug ist gegen die Umgebung geschlossen und für das Gas mit dem verdampften Material zu entsprechenden Abscheidern, Filtern und Ähnlichem, wo das verdampfte Material zu einem Feststoff aggregiert wird. Als Gas oder Gasstrom wird insbesondere Luft oder ein inertes Gas wie insbesondere Stickstoff eingesetzt.

Bevorzugt ist das Werkstück relativ zum Laseremitter beweglich, insbesondere verschieblich oder drehbar, beispielsweise um die Bearbeitung mehrerer Oberflächen des Werkstücks zu ermöglichen. Alternativ oder zusätzlich ist der Laseremitter relativ zum Werkstück beweglich, insbesondere in drei Raumachsen verschiebbar und/oder verschwenkbar.

Durch den Einsatz des erfindungsgemäßen Verfahrens können eine Vielzahl von Materialien abgetragen werden wie beispielsweise Eisen, Stähle, Nichteisenmetalle, Edelstähle, Beton und/oder Kunststoff. Durch das erfindungsgemäße Verfahren können entsprechende Werkstücke einfach dekontaminiert werden, ohne dass Chemikalien, Strahlmedien oder ähnliches eingesetzt werden müssen, die ebenfalls dekontaminiert beziehungsweise als Sekundärabfall entsorgt oder eingelagert werden müssen. Im Vergleich zu aus dem Stand der Technik bekannten Verfahren ist beim erfindungsgemäßen Verfahren der Aufwand deutlich reduziert. Weiterhin erlaubt die Abtragung von Material durch einen Laserstrahl auch die einfache Bearbeitung von komplexen Geometrien, die anderen Verfahren nicht zugänglich sind. Zudem erlaubt der Einsatz von Laserstrahlung zur Abtragung von oberflächennahem Material auch eine einfache Automatisierung der Verfahrensführung, da ein Laserstrahl einfach automatisch zu fokussieren und zu lenken ist. Eine manuelle Verfahrensführung ist ebenfalls vorteilhaft, insbesondere dann, wenn eine Vielzahl von unterschiedlich geformten Werkstücken dekontaminiert werden muss.

Gemäß der Erfindung wird das verdampfte Material im Abzug einer Analyse unterzogen. Besonders bevorzugt ist in diesem Zusammenhang, dass die Analyse mindestens einen der folgenden Parameter untersucht:
a) eine Radioaktivität des verdampften Materials; und
b) eine chemische Zusammensetzung des verdampften Materials.

Die Analyse des verdampften Materials bereits im Abzug ermöglicht in vorteilhafter Weise die Datengewinnung während des Abtragens, ohne dass eine spezielle Probe analysiert werden muss. Insbesondere bei der Analyse der Radioaktivität des verdampften Materials können so Erkenntnisse über die Oberfläche des Werkstücks und den Grad der durchgeführten Dekontamination erlangt werden. So ist es vorteilhaft möglich, den Auftreffbereich so lange in einem bestimmten Bereich der Oberfläche des Werkstücks zu halten oder die Behandlung so lange zu wiederholen, bis die Radioaktivität des verdampften Materials eine Obergrenze unterschreitet. Zusätzlich ist es auch möglich, Hinweise auf die chemische Zusammensetzung des verdampften Materials und damit der Oberfläche des Werkstücks zu erhalten, in dem beispielsweise eine Massenspektrometrie an dem verdampften Material im Abzug durchgeführt wird. So ist es beispielsweise möglich, ein Werkstück mit einer Oberflächenbeschichtung oder Lackierung so lange zu bearbeiten, das heißt insbesondere, den Auftreffbereich so lange nicht zu verschieben, bis die Analyse der chemischen Zusammensetzung des verdampften Materials zeigt, dass nunmehr Material unterhalb der Oberflächenbeschichtung oder Lackierung abgetragen wird.

Bevorzugt wird der Auftreffbereich so variiert, dass ein vorgebbarer Bereich der Oberfläche des Werkstücks abgetragen wird.

Dieser vorgebbare Bereich kann die gesamte Oberfläche des Werkstücks umfassen oder auch nur einen Teil davon, beispielsweise nur denjenigen Teil, der radioaktiver Strahlung ausgesetzt war. Der vorgebbare Bereich lässt sich bevorzugt vor Beginn der Abtragung beispielweise durch Messungen mit einem Geiger-Müller-Zählrohr festlegen.

Die Variation des Auftreffbereichs umfasst bevorzugt die Variation der Position des Auftreffbereichs auf einer Oberfläche des Werkstücks, die Variation der Größe des Auftreffbereichs auf einer Oberfläche des Werkstücks, die Variation der Form des Auftreffbereichs auf einer Oberfläche des Werkstücks und/oder die Variation der Fokussierung der Laserpulse auf einer Oberfläche des Werkstücks. Die Variation wird dabei bevorzugt durch mechanische Mittel, beispielsweise Motoren zur Bewegung von Werkstück und Laseremitter relativ zueinander, und/oder durch optische Mittel, beispielsweise Blenden, Spiegel, Linsen oder Ähnliches, erreicht.

Erfindungsgemäß ist eine Verfahrensführung, bei der im Abzug die Radioaktivität des verdampften Materials gemessen wird und der Auftreffbereich erst dann variiert wird, wenn die gemessene Radioaktivität unterhalb eines vorgebbaren Grenzwertes liegt.

Dies erlaubt auf einfache Art eine effiziente Dekontaminierung von radioaktiv belasteten Werkstücken, da so ein bestimmter Auftreffbereich dekontaminiert wird, bis ein vorgebbarer Grenzwert der Radioaktivität unterschritten wird. Wird dies für den gesamten zu dekontaminierenden Bereich einer Oberfläche des Werkstücks durchgeführt, so kann die Notwendigkeit einer Nachbearbeitung, wenn nicht genug oberflächennahes Material vom Werkstück abgetragen wurde, unterbleiben. So können die Kosten und die notwendige Zeit für die Dekontamination im Vergleich zu herkömmlichen Verfahren signifikant reduziert werden. Gemäß einem weiteren Aspekt der vorliegenden Erfindung wird eine Vorrichtung zum Aufbereiten von kontaminierten Werkstücken vorgeschlagen, insbesondere zur Durchführung des erfindungsgemäßen Verfahrens, umfassend:
einen Laseremitter zur Emission von Laserpulsen auf einen Auftreffbereich der Oberfläche des Werkstücks emittiert werden zur Verdampfung eines Teils des Materials des Werkstücks im Auftreffbereich,
einen Abzug zu Abführung des verdampften Materials.

Erfindungsgemäß ist im Abzug mindestens eines der folgenden Analysegeräte ausgebildet:
a) mindestens einen Radioaktivitätssensor;
b) vorteilhaft, mindestens ein Geiger-Müller-Zählrohr;
c) vorteilhaft, mindestens eine Ionisationskammer;
d) vorteilhaft, mindestens ein Proportionalszähler; und
e) vorteilhaft, mindestens ein Massenspektrometer.

Geiger-Müller-Zählrohr, Ionisationskammern und Proportionalzähler sind Detektoren zum Messen von ionisierender Strahlung, und Radioaktivität, die in bekannter Weise zum Bestimmen der Radioaktivität in einem sensitiven Volumen eingesetzt werden. Ein Massenspektrometer ist eine Analysevorrichtung, die an einer gasförmigen Probe eine massenspektrometrische Untersuchung durchführt und die relative Menge eines bestimmten Atoms oder Moleküls in einem sensitiven Volumen als Messergebnis liefert.

Bevorzugt umfasst der Laseremitter Mittel zur Variation des Auftreffbereichs. Diese Mittel können mechanisch und/oder optisch eine Variation des Auftreffbereichs wie beschrieben bewirken.

Erfindungsgemäß umfasst die Vorrichtung weiterhin eine Steuereinrichtung zur Steuerung der Vorrichtung nach dem erfindungsgemäßen Verfahren. Insbesondere kann die Steuereinrichtung den Auftreffbereich variieren, insbesondere in Abhängigkeit von einer Messung der Radioaktivität des verdampften Materials im Abzug. Die Steuereinrichtung kann dabei als Computersoft- und/oder -hardware ausgebildet sein.

Die für das erfindungsgemäße Verfahren offenbarten Details und Vorteile lassen sich auf die erfindungsgemäße Vorrichtung übertragen und anwenden und umgekehrt. Das erfindungsgemäße Verfahren und die erfindungsgemäße Vorrichtung lassen sich bevorzugt für die Dekontamination von radioaktiv kontaminierten Werkstücken verwenden.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren (gemäß den beiliegenden Ansprüchen).

Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:

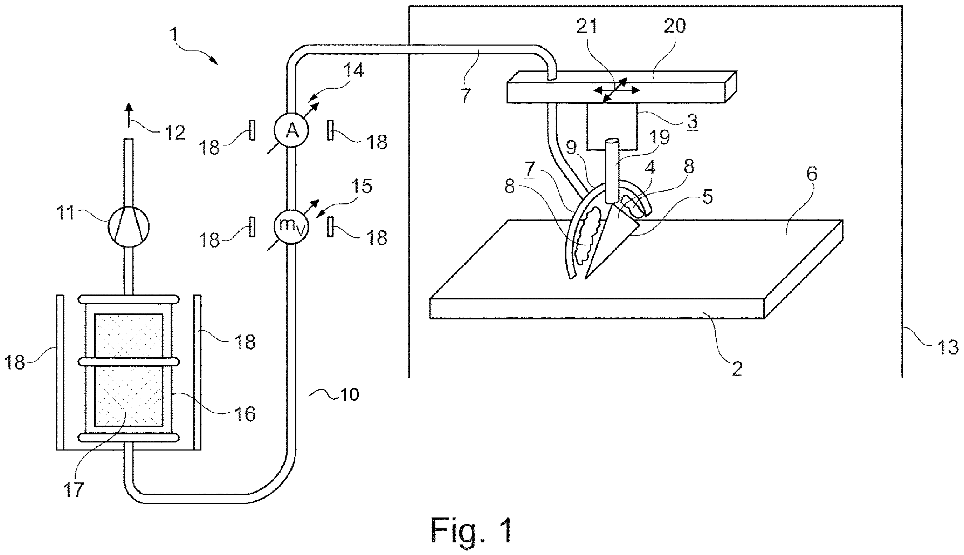

Fig. 1 schematisch ein Beispiel einer Vorrichtung zum Aufbereiten von kontaminierten Werkstücken.

Fig. 1 zeigt schematisch ein Beispiel einer Vorrichtung 1 zum Aufbereiten eines kontaminierten Werkstücks 2. Die Vorrichtung 1 umfasst einen Laseremitter 3 zur Emission von Laserpulsen 4 auf einen Auftreffbereich 5 einer Oberfläche 6 des Werkstücks 2 zur Verdampfung eines Teils des Materials des Werkstücks 2 im Auftreffbereich 5 und einen Abzug 7 zur Abführung des verdampften Materials 8. Der Abzug 7 umfasst eine - schematisch gezeigte - erste Abdeckung 9 auf, die mit einer Absaugung 10 verbunden ist. Die Absaugung 10 ist eine Leitung, die mit der ersten Abdeckung 9 verbunden ist. In der Absaugung 10 wird durch einen Lüfter 11 ein Unterdruck erzeugt, durch den ein Gasstrom 12 durch die Absaugung 10 erzeugt wird. Durch den Gasstrom 12 wird das verdampfte Material 8 aus der ersten Abdeckung 9 abgesaugt. Alternativ oder zusätzlich zur ersten Abdeckung 9 kann der Abzug 7 auch eine zweite Abdeckung 13 aufweisen, die im Gegensatz zur ersten Abdeckung 9 das gesamte Werkstück aufnimmt. Erste Abdeckung 9 und/oder zweite Abdeckung 13 sind so gestaltet, dass der Gasstrom 12 durch den Lüfter 11 und damit ein Unterdruck in der ersten Abdeckung 9 und/oder der zweiten Abdeckung 13 erzeugt werden kann.

Durch das Auftreffen der Laserpulse 4 auf den Auftreffbereich 5 bewirkt ein Verdampfen des Materials des Werkstücks 2 im oberflächennahen Bereich des Auftreffbereichs 5, so dass das verdampfte Material 8, im wesentlichen Plasma, entsteht. Dieses verdampfte Material 8 wird durch den Abzug 7 abgezogen. Im Abzug 7 wird das verdampfte Material 8 Analysen unterzogen. Hierzu umfasst der Abzug 7 einen Radioaktivitätssensor 14, der in diesem Beispiel als Geiger-Müller-Zählrohr ausgebildet ist. Weiterhin umfasst der Abzug 7 ein Massenspektrometer 15. Durch den Radioaktivitätssensor 14 wird die Radioaktivität des verdampften Materials 8 gemessen, wenn es durch den Radioaktivitätssensor 14 geführt wird. Durch das Massenspektrometer 15 wird die chemische Zusammensetzung des verdampften Materials beim Durchströmen des Massenspektrometers 15 bestimmt.

Nach Durchströmen des Massenspektrometers 15 durchströmt der Gasstrom 12 einen Aufnahmebehälter 16, der mit einem Filtermaterial 17 versehen ist. Das verdampfte Material 9 wird dabei im Filtermaterial 17 abgeschieden. Der Aufnahmebehälter 16 ist so gestaltet, dass der vollständige Gasstrom 12 durch den Auffangbehälter 16 strömt und dann, wenn das Filtermaterial 17 keine weitere Materie mehr aufnehmen kann, getauscht werden kann. Er weist insbesondere entsprechende Anschlüsse für die Absaugung 10 auf. Nach Durchströmen des Filtermaterials 17 weist der Gasstrom 12 eine so geringe Strahlenbelastung auf, dass er in die Umgebung abgegeben werden kann.

Falls notwendig sind Abschirmungen 18, insbesondere Bleiabschirmungen, ausgebildet, sowohl um die Abgabe von radioaktiver Strahlung an die Umgebung zu minimieren als auch um das Eindringen von externer Störstrahlung im Bereich der Analysegeräte (Massenspektrometer 15, Radioaktivitätssensor 14) zu verhindern . Die Absaugung 10 kann entsprechend mit einer integrierten Abschirmung ausgebildet sein.

Der Laseremitter 3 weist eine Laserquelle 19 auf, die auf bekannte Art einen Laserpuls erzeugt. Weiterhin umfasst der Laseremitter 3 nicht im Detail gezeigte optische Komponenten wie beispielsweise Linsen, Spiegel, Blenden und ähnliches und ggf. mechanische Komponenten. Der Laseremitter 3 umfasst weiterhin einen Halter 20, relativ zum Werkstück 2 beweglich ist und somit eine dreidimensionale Bewegung 21 durchführen kann. Zusätzlich kann der Laseremitter 3 auch verschwenkt werden.

Das erfindungsgemäße Verfahren und die erfindungsgemäße Vorrichtung 1 zum Aufbereiten von kontaminierten Werkstücken 2 erlauben eine effiziente, automatisierbare Abtragung von - insbesondere radioaktiv - kontaminiertem oberflächennahem Material des Werkstücks 2 durch Laserablation. Das verdampfte Material 8 kann in einem Abzug 7 analysiert werden, beispielsweise im Hinblick auf seine Radioaktivität (beispielsweise mittels des Radioaktivitätssensors 14) und/oder seine chemische Zusammensetzung (beispielsweise mittels des Massenspektrometers 15). Durch die kontinuierliche Überwachung der Radioaktivität und/oder der chemischen Zusammensetzung kann die Abtragung des Materials gesteuert werden, so dass ausschließlich Material einer bestimmten Kontamination abgetragen wird. Das verdampfte Material 8 wird in einem Auffangbehälter 18 gesammelt.

### Bezugszeichenliste

- 1: Vorrichtung zum Aufbereiten von kontaminierten Werkstücken
- 2: Werkstück
- 3: Laseremitter
- 4: Laserpuls
- 5: Auftreffbereich
- 6: Oberfläche
- 7: Abzug
- 8: verdampftes Material
- 9: erste Abdeckung
- 10: Absaugung
- 11: Lüfter
- 12: Gasstrom
- 13: zweite Abdeckung
- 14: Radioaktivitätssensor
- 15: Massenspektrometer
- 16: Aufnahmebehälter
- 17: Filtermaterial
- 18: Abschirmung
- 19: Laserquelle
- 20: Halter
- 21: dreidimensionale Bewegung

## Patentansprüche

1. Verfahren zum Aufbereiten eines kontaminierten Werkstücks (2), bei dem ein Laseremitter (3) auf das Werkstück (2) gerichtet wird und durch den Laseremitter (3) Laserpulse (4) auf einen Auftreffbereich (5) einer Oberfläche (6) des Werkstücks (2) emittiert werden zur Verdampfung eines Teils des Materials des Werkstücks (2) im Auftreffbereich (5), wobei das verdampfte Material (8) durch einen Abzug (7) abgeführt wird, **dadurch gekennzeichnet, dass** im Abzug (8) die Radioaktivität des verdampften Materials (8) gemessen wird und der Auftreffbereich (5) erst dann variiert wird, wenn die gemessene Radioaktivität unterhalb eines vorgebbaren Grenzwertes liegt.

2. Verfahren nach Anspruch 1, wobei das verdampfte Material (8) im Abzug (7) einer Analyse unterzogen wird, wobei die Analyse mindestens eine chemische Zusammensetzung des verdampften Materials (8) untersucht.

3. Verfahren nach einem der vorhergehenden Ansprüche, bei dem der Auftreffbereich (5) so variiert wird, dass ein vorgebbarer Bereich der Oberfläche (6) des Werkstücks (2) abgetragen wird.

4. Vorrichtung (1) zum Aufbereiten eines kontaminierten Werkstücks (2), umfassend:
einen Laseremitter (3) zur Emission von Laserpulsen (4) auf einen Auftreffbereich (5) einer Oberfläche (6) des Werkstücks (2) zur Verdampfung eines Teils des Materials des Werkstücks (2) im Auftreffbereich (5);
einen Abzug (7) zur Abführung des verdampften Materials (8),
eine Steuereinrichtung zur Steuerung der Vorrichtung (1) nach dem Verfahren nach einem der vorhergehenden Ansprüche,
ein Analysegerät,
**dadurch gekennzeichnet, dass** das Analysegerät als Radioaktivitätssensor (14) ausgebildet ist.

5. Vorrichtung (1) nach Anspruch 4, bei der im Abzug (7) mindestens eines der folgenden Analysegeräte ausgebildet ist:
a) mindestens ein Geiger-Müller-Zählrohr;
b) mindestens eine Ionisationskammer;
c) mindestens ein Proportionalszähler; und
d) mindestens ein Massenspektrometer (15).

6. Vorrichtung nach einem der Ansprüche 4 oder 5, bei der der Laseremitter (3) Mittel zur Variation des Auftreffbereichs (5) umfasst.

## Claims

1. Method for processing a contaminated workpiece (2), in which a laser emitter (3) is directed onto the workpiece (2), and laser pulses (4) are emitted by the laser emitter (3) onto an impact region (5) of a surface (6) of the workpiece (2) to evaporate a part of the material of the workpiece (2) in the impact region (5), wherein the evaporated material (8) is removed through a flue (7), **characterized in that** the radioactivity of the evaporated material (8) is measured in the flue (8), and the impact region (5) is only varied when the measured radioactivity is below a predefinable limit value.

2. Method according to claim 1, wherein the evaporated material (8) is subjected to an analysis in the flue (7), wherein the analysis examines at least one chemical composition of the evaporated material (8).

3. Method according any of the preceding claims, wherein the impact region (5) is varied in such a way that a predefinable region of the surface (6) of the workpiece (2) is removed.

4. Device (1) for processing a contaminated workpiece (2), comprising:
a laser emitter (3) for emitting laser pulses (4) onto an impact region (5) of a surface (6) of the workpiece (2) to evaporate a part of the material of the workpiece (2) in the impact region (5);
a flue (7) for removing the evaporated material (8),
a controller for controlling the device (1) according to the method according to any of the preceding claims,
an analytical apparatus,
**characterized in that** the analytical apparatus is designed as a radioactivity sensor (14).

5. Device (1) according to claim 4, wherein at least one of the following analytical apparatuses is formed in the flue (7):
a) at least one Geiger-Müller tube;
b) at least one ionization chamber;
c) at least one proportional counter; and
d) at least one mass spectrometer (15).

6. Device according to either of claims 4 or 5, wherein the laser emitter (3) comprises means for varying the impact region (5).

## Revendications

1. Procédé permettant le traitement d'une pièce (2) contaminée, dans lequel un émetteur laser (3) est dirigé sur la pièce (2) et des impulsions laser (4) sont émises par l'émetteur laser (3) sur une zone d'impact (5) d'une surface (6) de la pièce (2) pour l'évaporation d'une partie du matériau de la pièce (2) dans la zone d'impact (5), le matériau évaporé (8) étant évacué par une évacuation (7), **caractérisé en ce que** la radioactivité du matériau évaporé (8) est mesurée dans l'évacuation (8) et la zone d'impact (5) n'est modifiée que lorsque la radioactivité mesurée est inférieure à une valeur limite pouvant être prédéfinie.

2. Procédé selon la revendication 1, dans lequel le matériau évaporé (8) est soumis à une analyse dans l'évacuation (7), l'analyse examinant au moins une composition chimique du matériau évaporé (8).

3. Procédé selon l'une des revendications précédentes, dans lequel la zone d'impact (5) est modifiée de telle sorte qu'une zone pouvant être prédéfinie de la surface (6) de la pièce (2) est enlevée.

4. Dispositif (1) permettant le traitement d'une pièce (2) contaminée, comprenant :
un émetteur laser (3) permettant d'émettre des impulsions laser (4) sur une zone d'impact (5) d'une surface (6) de la pièce (2) pour l'évaporation d'une partie du matériau de la pièce (2) dans la zone d'impact (5) ;
une évacuation (7) permettant d'évacuer le matériau évaporé (8),
un appareil de commande permettant de commander le dispositif (1) selon le procédé selon l'une des revendications précédentes,
un analyseur,
**caractérisé en ce que** l'analyseur est réalisé sous la forme d'un capteur de radioactivité (14).

5. Dispositif (1) selon la revendication 4, dans lequel au moins l'un des analyseurs suivants est réalisé dans l'évacuation (7) :
a) au moins un tube compteur Geiger-Müller ;
b) au moins une chambre d'ionisation ;
c) au moins un compteur proportionnel ; et
d) au moins un spectromètre de masse (15).

6. Dispositif selon l'une des revendications 4 ou 5, dans lequel l'émetteur laser (3) comprend des moyens permettant de modifier la zone d'impact (5).
